(19) Europäisches Patentamt
European Patent Office
Office européen des brevets

(11) Publication number : 0 428 393 B1

(12) **EUROPEAN PATENT SPECIFICATION**

(45) Date of publication of patent specification : **06.10.93 Bulletin 93/40**

(21) Application number : **90312393.3**

(22) Date of filing : **13.11.90**

(51) Int. Cl.$^5$ : **C10M 141/10,**
// (C10M141/10, 129:38, 129:93, 129:95, 133:06, 133:56, 135:02, 137:02), C10N40:04, C10N60:14

(54) **Gear oils and additives therefor.**

(30) Priority : **13.11.89 US 434266**

(43) Date of publication of application : **22.05.91 Bulletin 91/21**

(45) Publication of the grant of the patent : **06.10.93 Bulletin 93/40**

(84) Designated Contracting States : **BE DE ES FR GB IT**

(56) References cited :
**WO-A-87/07637**
**WO-A-88/05810**
**US-A- 3 013 971**
**US-A- 4 431 552**

(73) Proprietor : **ETHYL PETROLEUM ADDITIVES, INC.**
**20 South Fourth Street**
**St. Louis Missouri 63102-1886 (US)**

(72) Inventor : **Norman, Stephen**
**8 Ridgelawn Court**
**Florissant, Missouri 63031 (US)**
Inventor : **Conary, Gregory Steven**
**9855 Zenith Drive**
**St. Louis, Missouri 63123 (US)**

(74) Representative : **Myerscough, Philip Boyd et al**
**J.A.Kemp & Co. 14, South Square Gray's Inn**
**London, WC1R 5EU (GB)**

EP 0 428 393 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to gear oils and gear oil additive formulations having enhanced performance characteristics. More particularly this invention relates to gear oil and gear oil additive compositions having superior properties as seen in the L-60 Test for determining the deterioriation of gear lubricants when subject to severe thermal oxidation conditions.

In order to satisfy the performance criteria imposed upon automotive and industrial gear oils, a considerable number of additives and additive formulations have been proposed for use in gear oils. Generally speaking, most commercially used additive packages for gear oils contain, inter alia, one or more phosphorus-containing components, one or more sulfur-containing components, and one or more nitrogen-containing components. In some cases one or more of these additives can contain two, and possibly all three, of the elements P, S and N. But irrespective of the number and chemical composition of the individual additives employed, the commercially-used gear oil additive packages generally have an over-all sulfur-to-phosphorus weight ratio in the range of 5:1 to 40:1, and an over-all nitrogen-to-phosphorus weight ratio in the range of 0.05:1 to 2:1.

Among the phosphorus-containing additives proposed for use in gear oils are monoalkyl phosphites and phosphates, dialkyl phosphites and phosphates, trialkyl phosphites and phosphates, monoaryl phosphites and phosphates, diaryl phosphites and phosphates, triaryl phosphites and phosphates, long chain phosphoric or phosphonic acids and esters, alkyl acid phosphates, alicyclic esters of phosphoric acids, and the like.

Included among the sulfur-containing additives proposed for use in gear oils are sulfurized olefins, alkyl polysulfides, sulfurized fatty oils, sulfur chloride treated fatty oils, sulfurized terpenes, metal sulfides, and the like.

Nitrogen-containing additives proposed for use in gear oils include substituted imidazolines, fatty amides, long chain amines, long chain imides, aromatic amines, alkenyl succinimides, amine salts of high molecular weight organic acids, alkylamines, polyacrylamides, triazole derivatives, and the like.

Some of the additives containing at least two of the elements P, S and N in the same molecule proposed for gear oil usage are dithiophosphoric acid esters, zinc dithiophosphates, zinc and lead dithiocarbamates, phosphosulfurized terpenes, thiadiazoles, amine phosphates, olefin/phosphorus pentasulfide reaction products, and the like.

A number of technologically-advanced gear oil packages have been found to yield gear oils which in the standard L-60 Test produce excessive deposits on the gear face. Often times these deposits average as much as 0.02 to 0.03 millimeters in thickness on the gear face on completion of the test. For example, ANGLAMOL® 6063A, a commercial gear oil additive formulation available from The Lubrizol Corporation -- a product believed to contain, inter alia, sulfurized isobutylene, dialkyl polysulfide, and a phosphorus-based antiwear complement, when employed at the recommended dosage level of 6.25 weight percent was found to produce black deposits on the L-60 gear face. Likewise, a commercial gear oil formulation available from Ethyl Petroleum Additives, Inc., as HITEC® 320 additive, when used at the recommended dosage level of 5.25 weight percent also produces black deposits on the gear face in the L-60 test. Elemental analysis of these two products shows the former contains, on a weight basis, 1.4% of P, 27.8% of S, and 0.69% of N. Thus the ANGLAMOL® 6063A additive formulation has a sulfur:phosphorus weight ratio of about 20:1, and a nitrogen:phosphorus weight ratio of about 0.5:1. In the HITEC® 320 additive formulation these ratios are, respectively, 16.3:1 and 0.4:1. Similar considerations apply, both as regards over-all chemical composition and L-60 gear face performance, to several other commercially available gear oil additive packages.

The formation of such deposits on the gear face in L-60 tests is an undesirable result which has led some consumers to the erroneous belief that the commercial additive package has inadequate thermal stability. Accordingly the industry has been revising their additive packages to provide formulations which give relatively clean gear faces in the L-60 test; one such additive package is the subject of our copending application EP-A-430,624.

This invention provides gear oil and gear oil additive formulations which form little or no deposits on the gear face when the gear oil is subjected to the standard L-60 Test (formerly the CRC L-60 Test and FTMS 791B Method 2504) as set forth in ASTM Special Technical Publication 512A, Copyright 1986, Library of Congress Catalog No. 86-20566. Thus the compositions of this invention exhibit superior properties as seen in the L-60 test.

Thus in accordance with one of its embodiments, this invention provides improvements in a gear oil which contains an additive complement including at least one phosphorus-containing additive, at least one sulfur-containing additive and at least one nitrogen-containing additive in amounts such that the weight ratio of sulfur to phosphorus is in the range of 5:1 to 40:1 and the weight ratio of nitrogen to phosphorus is in the range of 0.05:1 to 2:1, and which produces when subjected to the L-60 test a deposit on the gear face averaging at least about 0.01 millimeter in thickness. The improvement comprises including in such gear oil in an amount

sufficient to reduce the amount of deposits that would otherwise be formed on the gear face in the L-60 test:

(i) at least one carboxylic derivative composition produced by reacting at least one substituted succinic acylating agent with a reactant selected from the group consisting of (a) amine having at least one primary or secondary amino group in the molecule, (b) alcohol, (c) reactive metal or reactive metal compound, and (d) a combination of two or more of any of (a) through (c) the components of (d) being reacted with such substituted succinic acylating agent(s) simultaneously or sequentially in any order, wherein such substituted succinic acylating agent(s) has/have a substituent group derived from polyalkene having an Mn value of 500 to 10,000 (preferably in the range of 750 to 5,000); and

(ii) at least one amine salt of (e) one or more long chain (e.g., $C_8$ to $C_{50}$) monocarboxylic acids, or of (f) one or more long chain polycarboxylic acids, or of (g) a combination of at least one acid of (e) and at least one acid of (f).

In another of its embodiments this invention provides improved gear oil additive packages or formulations. More particularly, this invention provides in a gear oil additive formulation which includes at least one phosphorus-containing component, at least one sulfur-containing component and at least one nitrogen-containing component in amounts such that the weight ratio of sulfur to phosphorus is in the range of 5:1 to 40:1 and the weight ratio of nitrogen to phosphorus is in the range of 0.05:1 to 2:1, such concentrate when incorporated into a gear oil base stock at a particular concentration within the range of 1 to 15 weight percent, (preferably in the range of 2.5 to 15 weight percent for automotive gear oil use and in the range of 1 to 4 weight percent for industrial gear oil use), providing a gear oil which when subjected to the L-60 test produces a deposit on the gear face averaging at least about 0.01 millimeter in thickness, the improvement which comprises the presence in such concentrate, in an amount sufficient to reduce the amount of deposits that would otherwise be formed on the gear face in the L-60 test when such gear oil base stock contains such concentrate at such particular concentration, of

(i) at least one carboxylic derivative composition produced by reacting at least one substituted succinic acylating agent with a reactant selected from the group consisting of (a) amine having at least one primary or secondary amino group in the molecule, (b) alcohol, (c) reactive metal or reactive metal compound, and (d) a combination of two or more of any of (a) through (c) the components of (d) being reacted with such substituted succinic acylating agent(s) simultaneously or sequentially in any order, wherein such substituted succinic acylating agent(s) has/have a substituent group derived from polyalkene having an Mn value of 500 to 10,000 (preferably 750 to 5,000), and

(ii) at least one amine salt of (e) one or more long chain (e.g., $C_8$ to $C_{50}$) monocarboxylic acids, or of (f) one or more long chain polycarboxylic acids, or of (g) a combination of at least one acid of (e) and at least one acid of (f).

In the interest of brevity, the above-defined carboxylic derivative compositions are collectively referred to as "succinic derivatives". Likewise, unless otherwise specified, the products formed from reactant (a) or a combination of reactant (a) with one or more of reactants (b) and/or (c) are collectively referred to as "succinimides", a term which is meant to encompass the completed reaction product from the reaction irrespective of whether the product contains amide, amidine, ester, and/or salt linkages in addition to the imide linkage of the type that results from the reaction of a primary amino group and an anhydride moiety. Similarly, the products formed from reactant (b) or a combination of reactant (b) with reactant (c) are collectively referred to as "succinic esters", a term which is meant to encompass the completed reaction product from the reaction irrespective of whether the product contains salt linkages in addition to the ester linkage of the type that results from the reaction of a hydroxyl group and an anhydride moiety.

The succinimides and succinic esters can, in accordance with still further embodiments of this invention, be chemically modified by boronation, e.g., the succinimide(s) and succinic ester(s) can be reacted with boric acid or like boron-containing reactant in order to incorporate a small amount (usually in the range of 0.5 to 2 wt.%) of boron into the chemical structure of the succinimide(s) and/or succinic ester(s). Higher or lower concentrations of boron in such succinimide(s) and/or succinic ester(s) are feasible. For the sake of brevity, such boron-containing succinimides and boron-containing succinic esters will be collectively referred to hereinafter as "boronated succinimides" and "boronated succinic esters", respectively.

A feature of this invention is that the chemical composition of the phosphorus-, sulfur-, and nitrogen-containing additive complement in the gear oil and gear oil additive formulations can be widely varied and thus is of no concern as regards the practice of this invention. Likewise, the chemical composition and properties of the other additives employed in the formulations (e.g., defoamers, demulsifiers, sulfur scavengers, diluents, stabilizers, antioxidants, metal deactivators, or pour point depressants) form no part of this invention. As long as the formulation performs the functions of a conventional gear oil additive formulation, and as long as the package produces gear face deposits in the L-60 test when blended at 1 to 15 weight percent concentration in a base oil, the performance of the composition in the L-60 test can be improved by the practice of this invention. In other words, a gear oil or gear oil package that gives an average of at least 0.01 millimeter-thick deposits on the gear face in the L-60 test is transformed by this invention into a gear oil or gear oil package that produces virtually no deposits on the gear face in the L-60 test. It is to be noted that when preparing the gear oil additive concentrates, individual components may interact with each other to produce new chemical compounds, as for example, a basic substance reacting with an acidic substance to form a salt or salt-like compound. As long as the product(s) resulting from such interactions are compatible with the remainder of the components of the package (including any other products formed by such interactions) in the sense that a shelf-stable concentrate is formed, and as long as the concentrate performs the functions of a conventional gear oil additive formulation, yet produces undesirable products on the gear face in the L-60 test, the concentrate is amendable for improvement pursuant to the practice of this invention.

Without desiring to be bound by theoretical considerations, it is believed that the succinic derivative (component (i) above) prevents the formation of sludge during the L-60 test and that the amine salt (component (ii) above) forms, because of its polarity, a film on the surfaces of the gear faces in the L-60 test and prevents harder carbonaceous deposits from forming on such surfaces. Irrespective of the actual mechanism or mechanisms involved, the net result of the use of these components in combination is that on completion of the L-60 test, the gear faces are clean or essentially clean.

Preferred gear oil additive packages of this invention are soluble in mineral and synthetic base oils to the extent of at least 15 weight percent at 25°C.

The above and other features and embodiments of this invention will become still further apparent from the ensuing description and appended claims.

Inasmuch as the composition, characteristics, and methods for the preparation of the various additives used in the production of gear oils are well known to those skilled in the art, a description of such components is relegated to the final portions of this specification. At this juncture suffice it to say that the additive concentrates of this invention will contain succinic derivative(s) (i.e., component (i) above), preferably one or more succinimides or boronated succinimides, in an amount ranging from 5 to 20 and preferably from 10 to 15 weight percent of the total composition. Likewise, the additive concentrates of this invention will contain from 0.5 to 5 weight percent of one or more amine salts of one or more aliphatic carboxylic acids (i.e., component (ii) above).

By the same token, the finished gear oils of this invention will contain from 0.2 to 2.0, and preferably from 0.5 to 1.5, weight percent of the succinic derivative(s) -- e.g., succinimide(s) and/or boronated succinimide(s) and/or succinic ester(s) and/or boronated succinic ester(s) (or any mixture of any two or more of the foregoing) -- and from 0.05 to 0.5, and preferably from 0.08 to 0.4 weight percent of component (ii) above, (i.e., the amine salt(s) of one or more long chain aliphatic acids). Although components (i) and (ii) have been separately used heretofore in gear oils, it is believed that they have not been used in combination with each other in gear oils, muchless in gear oil compositions yielding the L-60 test results obtainable by the practice of this invention.

The additive concentrates of this invention can be blended into any of a wide variety of lubricant base stocks when forming the finished lubricants of this invention. The base oils for such use are generally mineral oil base stocks such as for example conventional and solvent-refined paraffinic neutrals and bright stocks, hydrotreated paraffinic neutrals and bright stocks, naphthenic oils, or cylinder oils, including straight run and blended oils. Synthetic base stocks can also be used in the practice of this invention, such as for example poly-alpha-olefin oils (PAO), alkylated aromatics, polybutenes, diesters, polyol esters, polyglycols, or polyphenyl ethers, and blends thereof. Typical of such oils are blends of poly-alpha-olefins with synthetic diesters in weight proportions (PAO:ester) ranging from 95:5 to 50:50, typically about 75:25. Generally speaking, the base stocks used in automotive gear oils range in viscosity grades from SAE 50 to 250 and preferably from 70 to 140. Suitable automotive gear oils also include cross-grades such as 75W-140, 80W-90, 85W-140, 85W-90, and the like. In general, the base stocks used in industrial gear oils will have a viscosity in the range of from ISO grade 32 to ISO grade 680 and preferably from ISO grade 68 to ISO grade 460.

In order to illustrate the practice of this invention, the following examples are presented. It is to be understood and appreciated that these examples are not intended to constitute, nor should they be construed as constituting, limitations on the invention. In these examples, all parts and percentages are by weight, and in each case the compositions have a S:P weight ratio in the range of 5:1 to 40:1 and an N:P weight ratio in the range of 0.05:1 to 2:1. Likewise, the succinimide referred to in the examples is the product formed from polyisobutenylsuccinic anhydride and ethylene polyamine mixture approximating tetraethylenepentamine in composition; the isobutenyl group being derived from polyisobutene having an Mn of about 1300. The boronated succinimide referred to in the examples is the product formed by reacting such succinimide with boric acid at a temperature of above 150°C in quantity sufficient to yield a boron content in the product of about 1.3% by weight. Succinimides and boronated succinimides are generally formed in the presence of a diluent for processing purposes. Thus in the ensuing examples, the proportions of succinimide or boronated succinimide represent the weight percentage of a blend composed of approximately 67% of the active ingredient (i. e., the

succinimide or boronated succinimide), and approximately 33% of a mineral oil diluent.

EXAMPLE 1

A gear oil additive concentrate of this invention is composed of the following ingredients:

| | |
|---|---|
| Succinimide | 15.0% |
| Octyl amine salt of lauric acid | 3.0% |
| Sulfurized isobutylene | 40.0% |
| Alkyl phosphite and phosphate | 5.0% |
| Alkyl amine | 1.9% |
| Trihydrocarbyl dithiophosphate | 17.0% |
| Defoamer and demulsifier | 0.9% |
| Sulfur scavenger | 1.3% |
| Mineral oil diluent | 15.9% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 2

The procedure of Example 1 is repeated except that the succinimide is boronated succinimide.

EXAMPLE 3

The procedure of Example 1 is repeated except that the additive concentrate contains 12.0% of the succinimide and 19.2% of the mineral oil diluent.

EXAMPLE 4

A gear oil additive concentrate of this invention is composed of the following ingredients:

| | |
|---|---|
| Succinimide | 13.3% |
| Octyl amine salt of stearic acid | 1.7% |
| Sulfurized isobutylene | 38.7% |
| Alkyl phosphite and phosphate | 5.5% |
| Alkyl amine | 2.1% |
| Trihydrocarbyl dithiophosphate | 18.8% |
| Defoamer and demulsifier | 1.0% |
| Sulfur scavenger | 1.4% |
| Mineral oil diluent | 17.5% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 5

The procedure of Example 4 is repeated except that the succinimide is boronated succinimide.

EXAMPLE 6

A gear oil additive concentrate of this invention is composed of the following ingredients:

| | |
|---|---|
| Succinimide | 16.6% |
| Octyl amine salt of stearic acid | 3.3% |
| Sulfurized isobutylene | 44.2% |
| Alkyl phosphite and phosphate | 5.5% |
| Alkyl amine | 2.1% |
| Trihydrocarbyl dithiophosphate | 18.8% |
| Defoamer and demulsifier | 1.0% |
| Sulfur scavenger | 1.4% |
| Mineral oil diluent | 7.1% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of

2.15%. Any such base stocks may contain a viscosity index improver, if desired.

EXAMPLE 7

The procedure of Example 6 is repeated except that the succinimide is boronated succinimide.

EXAMPLE 8

A gear oil additive concentrate of this invention is composed of the following ingredients:

| | |
|---|---|
| Succinimide | 16.6% |
| Octyl amine salt of stearic acid | 1.7% |
| Sulfurized isobutylene | 44.1% |
| Alkyl phosphite and phosphate | 5.5% |
| Alkyl amine | 2.1% |
| Trihydrocarbyl dithiophosphate | 18.8% |
| Defoamer and demulsifier | 1.0% |
| Sulfur scavenger | 1.4% |
| Mineral oil diluent | 8.8% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 9

The procedure of Example 8 is repeated except that the succinimide is boronated succinimide.

EXAMPLE 10

A gear oil additive concentrate of this invention is formed by blending together the following components in the proportions specified:

| | |
|---|---|
| Succinimide | 10.6% |
| Octyl amine salt of octanoic acid | 1.0% |
| Process oil | 8.6% |
| Anglamol 6063A* | 79.8% |

- - - - -

* A proprietary gear oil additive formulation commercially available from The Lubrizol Corporation

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 11.75%. For automotive use, with SAE grades heavier than 75, the treat rate is 7.8%. For industrial use with ISO viscosity grades 68, 100, 150, 220, 320 and 460, the formulation is used at a concentration of 2.2%, and the finished oil should contain at least 0.3% demulsifier. Any such base stocks may contain a viscosity index improver, if desired.

EXAMPLE 11

The procedure of Example 10 is repeated except that the succinimide is boronated succinimide.

EXAMPLE 12

A gear oil additive concentrate of this invention is composed of the following ingredients:

| | |
|---|---|
| Succinimide | 12.0% |
| Lauryl amine salt of lauric acid | 2.0% |
| Dialkyl polysulfide | 35.0% |
| Alkyl phosphite and phosphate | 5.0% |
| Alkyl amine | 1.9% |
| Trihydrocarbyl dithiophosphate | 17.0% |
| Defoamer | 0.6% |
| Sulfur scavenger | 1.3% |
| Demulsifier | 0.3% |
| Mineral oil diluent | 24.9% |

Gear oils are formed by blending the concentrate in mineral oil base stocks, synthetic base stocks, and combinations of mineral oil and synthetic oil base stocks. For automotive use, with SAE straight grades of 75 or

lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 13

The procedure of Example 12 is repeated except that the succinimide is boronated succinimide.

EXAMPLE 14

A gear oil additive concentrate of this invention is composed of the following ingredients:

| | |
|---|---|
| Succinimide | 15.0% |
| Dioctyl amine salt of lauric acid | 3.0% |
| Dialkyl polysulfide | 35.0% |
| Alkyl phosphite and phosphate | 5.0% |
| Alkyl amine | 1.9% |
| Trihydrocarbyl dithiophosphate | 17.0% |
| Defoamer | 0.6% |
| Sulfur scavenger | 1.3% |
| Demulsifier | 0.3% |
| Mineral oil diluent | 20.9% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 15

The procedure of Example 14 is repeated except that the succinimide is boronated succinimide.

EXAMPLE 16

A gear oil additive concentrate of this invention is composed of the following ingredients:

| | |
|---|---|
| Succinimide | 15.0% |
| Trioctyl amine salt of lauric acid | 3.0% |
| Dialkyl polysulfide | 40.0% |
| Alkyl phosphite and phosphate | 7.0% |
| Alkyl amine | 2.2% |
| Trihydrocarbyl dithiophosphate | 15.0% |
| Defoamer | 0.6% |
| Sulfur scavenger | 1.3% |
| Demulsifier | 0.3% |
| Mineral oil diluent | 15.6% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 17

The procedure of Example 16 is repeated except that the succinimide is boronated succinimide.

EXAMPLE 18

A gear oil additive concentrate of this invention is composed of the following ingredients:

| | |
|---|---|
| Succinimide | 12.0% |
| Dihexyl amine salt of stearic acid | 2.0% |
| Dialkyl polysulfide | 45.0% |
| Alkyl phosphite and phosphate | 7.5% |
| Alkyl amine | 2.4% |
| Trihydrocarbyl dithiophosphate | 14.0% |
| Defoamer | 0.6% |
| Sulfur scavenger | 1.7% |
| Demulsifier | 0.3% |
| Mineral oil diluent | 14.5% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 19

The procedure of Example 18 is repeated except that the succinimide is boronated succinimide.

EXAMPLE 20

A gear oil additive concentrate of this invention is composed of the following ingredients:

| | |
|---|---|
| Succinimide | 15.0% |
| Decyl amine salt of $C_{16}$ dicarboxylic acid | 3.0% |
| Dialkyl polysulfide | 45.0% |
| Alkyl phosphite and phosphate | 7.5% |
| Alkyl amine | 2.4% |
| Trihydrocarbyl dithiophosphate | 14.0% |
| Defoamer | 0.6% |
| Sulfur scavenger | 1.7% |
| Demulsifier | 0.3% |
| Mineral oil diluent | 10.5% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 21

The procedure of Example 20 is repeated except that the succinimide is boronated succinimide.

EXAMPLE 22

A gear oil additive concentrate of this invention is composed of the following ingredients:

| | |
|---|---|
| Succinimide | 15.0% |
| Octyl amine salt of octanoic acid | 1.4% |
| Sulfurized isobutylene | 41.3% |
| Alkyl phosphite and phosphate | 4.7% |
| Alkyl amine | 3.9% |
| Trihydrocarbyl dithiophosphate | 19.6% |
| Defoamer and demulsifier | 1.5% |
| Sulfur scavenger | 1.4% |
| Mineral oil diluent | 11.2% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 23

The procedure of Example 22 is repeated except that the succinimide is boronated succinimide.

EXAMPLE 24

The procedure of Example 22 is repeated except that the additive concentrate contains 10.0% of the succinimide and 16.2% of the mineral oil diluent.

EXAMPLE 25

The procedure of Example 22 is repeated except that the additive concentrate contains 12.0% of boronated succinimide and 14.2% of the mineral oil diluent.

EXAMPLE 26

A gear oil additive concentrate of this invention is composed of the following ingredients:

| | |
|---|---|
| Succinimide | 16.2% |
| Lauryl amine salt of octanoic acid | 1.5% |
| Sulfurized isobutylene | 20.5% |
| Dialkyl polysulfide | 20.5% |
| Alkyl phosphite and phosphate | 5.0% |
| Oleylamine | 3.9% |
| Trihydrocarbyl dithiophosphate | 19.2% |
| Defoamer and demulsifier | 1.5% |
| Sulfur scavenger | 1.4% |
| Mineral oil diluent | 10.3% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 27

The procedure of Example 26 is repeated except that the succinimide is boronated succinimide, the boronated succinimide is used in the concentrate at a concentration of 15.5%, and the concentration of the mineral oil diluent in the concentrate is 11.0%.

EXAMPLE 28

A gear oil additive concentrate of this invention is composed of the following ingredients:

| | |
|---|---|
| Succinimide | 12.0% |
| Octyl amine salt of decanoic acid | 1.6% |
| Sulfurized isobutylene | 35.0% |
| Alkyl phosphite and phosphate | 5.0% |
| Alkyl amine | 1.9% |
| O,O-dialkyl aminated polyethylene-oxythiophosphate | 17.0% |
| Defoamer | 0.6% |
| Sulfur scavenger | 1.3% |
| Demulsifier | 0.2% |
| Mineral oil diluent | 25.4% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 29

The procedure of Example 28 is repeated except that the succinimide is boronated succinimide.

EXAMPLE 30

A gear oil additive concentrate of this invention is composed of the following ingredients:

| | |
|---|---|
| Succinimide | 15.0% |
| Dibutyl amine salt of decanoic acid | 2.0% |
| Sulfurized isobutylene | 35.0% |
| Alkyl phosphite and phosphate | 5.0% |
| Alkyl amine | 1.9% |
| O,O-dialkyl aminated polyethylene-oxythiophosphate | 17.0% |
| Defoamer | 0.6% |
| Sulfur scavenger | 1.3% |
| Demulsifier | 0.3% |
| Mineral oil diluent | 21.9% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 31

The procedure of Example 30 is repeated except that the succinimide is boronated succinimide.

EXAMPLE 32

A gear oil additive concentrate of this invention is composed of the following ingredients:

| | |
|---|---|
| Succinimide | 15.0% |
| Dibutyl amine salt of decanoic acid | 2.0% |
| Sulfurized isobutylene | 35.0% |
| Alkyl phosphite and phosphate | 5.0% |
| Alkyl amine | 1.9% |
| O,O-dialkyl aminated polyethylene-oxythiophosphate | 20.0% |

| | |
|---|---|
| Defoamer | 0.6% |
| Sulfur scavenger | 1.3% |
| Demulsifier | 0.3% |
| Mineral oil diluent | 18.9% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 33

The procedure of Example 32 is repeated except that the succinimide is boronated succinimide.

EXAMPLE 34

A gear oil additive concentrate of this invention is composed of the following ingredients:

| | |
|---|---|
| Succinimide | 14.2% |
| Oleyl amine salts of $C_{10}$ & $C_{24}$ mono- and dicarboxylic acids | 2.8% |
| Sulfurized isobutylene | 35.0% |
| Alkyl phosphite and phosphate | 4.5% |
| Laurylamine | 2.0% |
| Trihydrocarbyl dithiophosphate | 15.8% |
| Defoamer | 1.2% |
| Sulfur scavenger | 1.2% |
| Mineral oil diluent | 23.3% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 35

The procedure of Example 34 is repeated except that the succinimide is boronated succinimide, and the

oleyl amine salts are replaced by lauryl amine salts.

EXAMPLE 36

The procedure of Example 34 is repeated except that the succinimide is boronated succinimide, the oleyl amine salts are replaced by cetyl amine salts of decanoic and octadecanoic acids, and the lauryl amine is replaced by a 50/50 w/w mixture of decanoic acid and octadecanoic acid.

EXAMPLE 37

A gear oil additive concentrate of this invention is composed of the following ingredients:

| | |
|---|---|
| Succinimide | 12.0% |
| Tert-dodecyl amine salt of octanoic acid | 1.5% |
| Sulfurized isobutylene | 35.0% |
| Alkyl phosphite and phosphate | 5.0% |
| Alkyl amine | 1.9% |
| O,O-dialkyl aminated polyethylene-oxythiophosphate | 19.0% |
| Defoamer | 0.6% |
| Sulfur scavenger | 1.3% |
| Demulsifier | 0.3% |
| Mineral oil diluent | 23.4% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 38

The procedure of Example 37 is repeated except that the succinimide is boronated succinimide.

EXAMPLE 39

A gear oil additive concentrate of this invention is composed of the following ingredients:

| | |
|---|---|
| Succinimide | 15.0% |
| Tert-dodecyl and tert-tetradecyl amine salts of decanoic and dodecanoic acid | 2.0% |
| Sulfurized isobutylene | 40.0% |
| Alkyl phosphite and phosphate | 6.0% |
| Alkyl amine | 2.1% |
| O,O-dialkyl aminated polyethylene-oxythiophosphate | 15.0% |
| Defoamer | 0.6% |
| Sulfur scavenger | 1.3% |
| Demulsifier | 0.3% |
| Mineral oil diluent | 17.7% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 40

The procedure of Example 39 is repeated except that the succinimide is boronated succinimide.

EXAMPLE 41

A gear oil additive concentrate of this invention is composed of the following ingredients:

| | |
|---|---|
| Succinimide | 12.7% |
| Alkyl amine salts of $C_8$ & $C_{30}$ mono- and dicarboxylic acids | 2.6% |

| | |
|---|---|
| Sulfurized isobutylene | 35.0% |
| Alkyl phosphite and phosphate | 4.7% |
| Alkyl amine | 1.9% |
| Trihydrocarbyl dithiophosphate | 16.6% |
| Defoamer | 0.6% |
| Sulfur scavenger | 1.3% |
| Mineral oil diluent | 24.6% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 42

The procedure of Example 41 is repeated except that the succinimide is boronated succinimide.

EXAMPLE 43

A gear oil additive concentrate of this invention is formed by blending together the following components in the proportions specified:

| | |
|---|---|
| Succinimide | 9.6% |
| Octyl amine salt of octanoic acid | 0.9% |
| Process Oil | 7.0% |
| Anglamol 6004A* | 81.6% |

- - - - -

* A proprietary gear oil additive formulation commercially available from The Lubrizol Corporation.

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 12.87%. For automotive use, with SAE grades heavier than 75, the treat rate is 8.58%. For industrial use with ISO viscosity grades 68, 100, 150, 220, 320 and 460, the formulation is used at a concentration of 2.15%, and the finished oil should contain at least 0.3% demulsifier. Any such base stocks may contain a viscosity index improver, if desired.

EXAMPLE 44

The procedure of Example 43 is repeated except that the succinimide is boronated succinimide.

EXAMPLE 45

A gear oil additive concentrate of this invention is composed of the following ingredients:

| | |
|---|---|
| Succinimide | 15.0% |
| Nonyl amine salt of pentadecanoic acid | 2.0% |
| Sulfurized isobutylene | 45.0% |
| Alkyl phosphite and phosphate | 7.0% |
| Alkyl amine | 2.4% |
| O,O-dialkyl aminated polyethyleneoxythiophosphate | 14.0% |
| Defoamer | 0.6% |
| Sulfur scavenger | 1.3% |
| Demulsifier | 0.3% |
| Mineral oil diluent | 12.4% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 46

The procedure of Example 45 is repeated except that the succinimide is boronated succinimide.

EXAMPLE 47

A gear oil additive concentrate of this invention is composed of the following ingredients:

| | |
|---|---|
| Succinimide | 12.0% |
| Neopentyl amine salt of decanoic acid | 1.5% |
| Sulfurized isobutylene | 40.0% |
| Alkyl phosphite and phosphate | 6.0% |
| Alkyl amine | 2.1% |
| O,O-dialkyl aminated polyethylene-oxythiophosphate | 15.0% |
| Defoamer | 0.6% |
| Sulfur scavenger | 1.3% |
| Demulsifier | 0.3% |
| Mineral oil diluent | 21.2% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 48

The procedure of Example 47 is repeated except that the succinimide is boronated succinimide.

EXAMPLE 49

A gear oil additive concentrate of this invention is composed of the following ingredients:

| | |
|---|---|
| Succinimide | 12.0% |
| Lauryl amine salt of oleic acid | 2.0% |
| Sulfurized isobutylene | 35.0% |
| Alkyl phosphite and phosphate | 3.0% |
| Dialkyl thiophosphate amine salt | 5.2% |
| Alkyl amine | 1.4% |
| Trihydrocarbyl dithiophosphate | 17.0% |

| | |
|---|---|
| Defoamer | 0.6% |
| Sulfur scavenger | 1.3% |
| Demulsifier | 0.3% |
| Mineral oil diluent | 22.2% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 50

The procedure of Example 49 is repeated except that the succinimide is boronated succinimide.

EXAMPLE 51

A gear oil additive concentrate of this invention is composed of the following ingredients:

| | |
|---|---|
| Succinimide | 15.0% |
| Dioctyl amine salt of oleic acid | 3.0% |
| Sulfurized isobutylene | 34.5% |
| Alkyl phosphite and phosphate | 3.2% |
| Dialkyl thiophosphate amine salt | 5.3% |
| Alkyl amine | 1.4% |
| Trihydrocarbyl dithiophosphate | 17.0% |
| Defoamer | 0.6% |
| Sulfur scavenger | 1.3% |
| Demulsifier | 0.3% |
| Mineral oil diluent | 18.4% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 52

The procedure of Example 50 is repeated except that the succinimide is boronated succinimide.

EXAMPLE 53

A gear oil additive concentrate of this invention is composed of the following ingredients:

| | |
|---|---|
| Succinimide | 12.4% |
| Di- and tributyl amine salts of stearic acid | 2.2% |
| Sulfurized isobutylene | 34.5% |
| Alkyl phosphite and phosphate | 2.5% |
| Dialkyl thiophosphate amine salt | 6.0% |
| Alkyl amine | 1.2% |
| Trihydrocarbyl dithiophosphate | 16.3% |
| Defoamer | 0.6% |
| Sulfur scavenger | 1.3% |
| Demulsifier | 0.3% |
| Mineral oil diluent | 22.7% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 54

The procedure of Example 53 is repeated except that the succinimide is boronated succinimide.

EXAMPLE 55

A gear oil additive concentrate of this invention is composed of the following ingredients:

| | |
|---|---|
| Succinimide | 15.0% |
| Mono- and dihexyl amine salts of stearic acid | 3.0% |
| Sulfurized isobutylene | 35.7% |
| Alkyl phosphite and phosphate | 2.5% |
| Dialkyl thiophosphate amine salt | 6.2% |
| Alkyl amine | 1.3% |
| Trihydrocarbyl dithiophosphate | 16.4% |
| Defoamer | 0.6% |
| Sulfur scavenger | 1.3% |
| Demulsifier | 0.3% |
| Mineral oil diluent | 17.7% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 56

The procedure of Example 55 is repeated except that the succinimide is boronated succinimide.

EXAMPLE 57

A gear oil additive concentrate of this invention is composed of the following ingredients:

| | |
|---|---|
| Succinimide | 12.8% |
| 2-Ethylhexyl amine salt of iso-stearic acid | 2.2% |
| Sulfurized isobutylene | 40.0% |
| Alkyl phosphite and phosphate | 2.5% |
| Dialkyl thiophosphate amine salt | 5.6% |
| Alkyl amine | 1.3% |
| Trihydrocarbyl dithiophosphate | 15.4% |
| Defoamer | 0.6% |
| Sulfur scavenger | 1.2% |
| Demulsifier | 0.4% |
| Mineral oil diluent | 18.0% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 58

The procedure of Example 57 is repeated except that the succinimide is boronated succinimide.

EXAMPLE 59

A gear oil additive concentrate of this invention is composed of the following ingredients:

| | |
|---|---|
| Succinimide | 14.8% |
| Octyl amine salt of lauric acid | 3.0% |
| Sulfurized isobutylene | 39.6% |
| Alkyl phosphite and phosphate | 2.6% |
| Dialkyl thiophosphate amine salt | 6.2% |
| Alkyl amine | 1.2% |
| Trihydrocarbyl dithiophosphate | 15.3% |

| | |
|---|---|
| Defoamer | 0.6% |
| Sulfur scavenger | 1.3% |
| Demulsifier | 0.3% |
| Mineral oil diluent | 15.1% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 60

The procedure of Example 59 is repeated except that the succinimide is boronated succinimide.

EXAMPLE 61

A gear oil additive concentrate of this invention is composed of the following ingredients:

| | |
|---|---|
| Succinimide | 12.5% |
| Octyl and decyl amine salts of lauric acid | 2.4% |
| Sulfurized isobutylene | 36.0% |
| Alkyl phosphite and phosphate | 1.5% |
| Dialkyl thiophosphate amine salt | 8.0% |
| Alkyl amine | 0.9% |
| Trihydrocarbyl dithiophosphate | 13.2% |
| Defoamer | 0.6% |
| Sulfur scavenger | 1.3% |
| Demulsifier | 0.3% |
| Mineral oil diluent | 23.3% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 62

The procedure of Example 61 is repeated except that the succinimide is boronated succinimide.

EXAMPLE 63

A gear oil additive concentrate of this invention is composed of the following ingredients:

| | |
|---|---|
| Succinimide | 15.0% |
| Octyl and dioctyl amine salts of stearic acid | 3.2% |
| Sulfurized isobutylene | 35.4% |
| Alkyl phosphite and phosphate | 1.3% |
| Dialkyl thiophosphate amine salt | 7.8% |
| Alkyl amine | 0.9% |
| Trihydrocarbyl dithiophosphate | 13.0% |
| Defoamer | 0.6% |
| Sulfur scavenger | 1.3% |
| Demulsifier | 0.3% |
| Mineral oil diluent | 21.2% |

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 9.45%. For automotive use, with SAE grades heavier than 75, the treat rate is 6.5%. For industrial use with ISO viscosity grades 68, 100, 150, 220, 320 and 460, the formulation is used at a concentration of 2.15%. Any such base stocks may contain a viscosity index improver, if desired.

EXAMPLE 64

The procedure of Example 63 is repeated except that the succinimide is boronated succinimide.

EXAMPLE 65

A gear oil additive concentrate of this invention is formed by blending together the following components in the proportions specified:

| | |
|---|---|
| Succinimide | 10.6% |
| Octyl amine salt of octanoic acid | 1.0% |
| Process Oil | 8.7% |
| Mobilad G-201* | 79.7% |

- - - - -

* A proprietary gear oil additive formulation commercially available from Mobil Chemical Company.

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 11.67%. For automotive use, with SAE grades heavier than 75, the treat rate is 7.78%. For industrial use with ISO viscosity grades 68, 100, 150, 220, 320 and 460, the formulation is used at a concentration of 3.04%, and the finished oil should contain at least 0.3% demulsifier. Any such base stocks may contain a viscosity index improver, if desired.

EXAMPLE 66

The procedure of Example 65 is repeated except that the succinimide is boronated succinimide.

EXAMPLE 67

A gear oil additive concentrate of this invention is formed by blending together the following components in the proportions specified:

| | |
|---|---|
| Succinimide | 10.2% |
| Octyl amine salt of octanoic acid | 1.0% |
| Process Oil | 8.4% |
| Elco 7* | 80.4% |

- - - - -

* A proprietary gear oil additive formulation commercially available from Elco Corporation.

Gear oils are formed by blending the concentrate in mineral oil base stocks, synthetic base stocks, and combinations of mineral oil and synthetic oil base stocks. For automotive use, with SAE straight grades of 75 or lower or SAE cross grades having a light viscosity end of 75W or lower, the formulation is used at a concentration of 12.12%. For automotive use, with SAE grades heavier than 75, the treat rate is 8.08%. For industrial use with ISO viscosity grades 68, 100, 150, 220, 320 and 460, the formulation is used at a concentration of 3.15%, and the finished oil should contain at least 0.3% demulsifier. Any such base stocks may contain a viscosity index improver, if desired.

EXAMPLE 68

The procedure of Example 67 is repeated except that the succinimide is boronated succinimide.

Gear oil compositions of this invention, when subjected to the standard L-60 test, have been found to eliminate or essentially eliminate deposit formation on the spur gear faces. This test involves placing a sample of gear lubricant in a heated gear box in which two spur gears and a test bearing are operating at a predetermined load in the presence of a copper catalyst. According to the test procedure, the temperature of the test lubricant is maintained at 325°F (162.5°C) while bubbling 0.3 gal/h (1.1L/h) of air through oil in the gear box for a test duration of 50 hours of continuous operation.

Having described the basic concepts of this invention, attention will now be focused upon details concerning the additive ingredients.

Component (i)

The carboxylic derivative compositions used in the practice of this invention are produced by reacting at least one substituted succinic acylating agent with (a) amine having at least one primary or secondary amino group in the molecule, (b) alcohol, (c) reactive metal or reactive metal compound, or (d) a combination of two or more of any of (a) through (c), the components of (d) being reacted with such substituted succinic acylating agent(s) simultaneously or sequentially in any order. The substituted succinic acylating agent contains a substituent group derived from polyalkene, the substituent having an Mn value of 500 to 10,000, preferably in the range of 750 to 5,000.

For the purposes of this invention, the Mn value for the polyalkene used in forming the substituted succinic acylating agent is determined by gel permeation chromatography in the manner described in U.S. Pat. No. 4,234,435 from Column 7, line 7 through Column 8, line 31

Thus, the substituted succinic acylating agents are those which can be characterized by the presence within their structure of two groups or moieties. The first group or moiety is a substituent group derived from a polyalkene. The polyalkene from which the substituted groups are derived is characterized by an Mn (number average molecular weight) value of from 500 to 10,000, and preferably in the range of from 750 to 5,000.

The second group or moiety is the succinic group, a group characterized by the structure

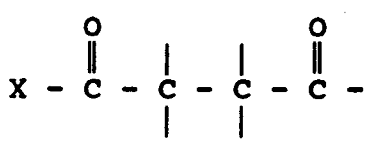

Formula I

wherein X and X' are the same or different provided at least one of X and X' is such that the substituted succinic acylating agent can function as a carboxylic acylating agent. In other words, at least one of X and X' must be such that the substituted acylating agent can esterify alcohols, form amides or amine salts with ammonia or amines, form metal salts with reactive metals or basically reacting metal compounds, and otherwise functions as a conventional carboxylic acid acylating agent. Transesterification and transamidation reactions are considered, for purposes of this invention, as conventional acylation reactions.

Thus, X and/or X' is usually -OH, -O-hydrocarbyl; $-O^-M^+$ where $M^+$ represents one equivalent of a metal, ammonium or amine cation, $-NH_2$, -Cl, -Br, and together, X and X' can be -O- so as to form the anhydride. The specific identify of any X or X' group which is not one of the above is not critical so long as its presence does not prevent the remaining group from entering into acylation reactions.

Preferably, however, X and X' are each such that both carboxyl functions of the succinic group can enter into acylation reactions.

One of the unsatisfied valences in the grouping

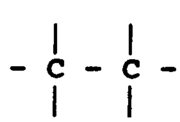

of Formula I forms a carbon-to-carbon bond with a carbon atom in the substituent group. While other such unsatisfied valence may be satisfied by a similar bond with the same or different substituent group, all but the

said one such valence is usually satisfied by a hydrogen atom.

The succinic groups of the succinic acylating agents will normally correspond to the formula

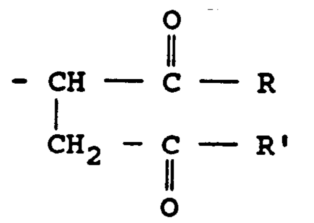

Formula II

wherein R and R' are each independently selected from the group consisting of -OH, -Cl, -OR" (R" = lower alkyl), and when taken together, R and R' are - O -. In the latter case the succinic group is a succinic anhydride group. All the succinic groups in a particular succinic acylating agent need not be the same, but they can be the same. Preferably, the succinic groups will correspond to

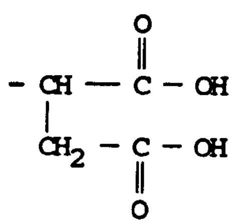

(A)

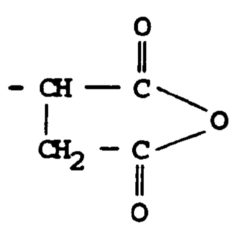

(B)

Formula III

and mixtures of III(A) and III(B). Production of substituted succinic acylating agents wherein the succinic groups are the same or different is within ordinary skill of the art and can be accomplished through conventional procedures such as treating the substituted succinic acylating agents themselves (for example, hydrolyzing the anhydride to the free acid or converting the free acid to an acid chloride with thionyl chloride) and/or selecting the appropriate maleic or fumaric reactants.

The polyalkenes from which the substituent groups are derived are homopolymers and interpolymers of polymerizable olefin monomers of 2 to about 16 carbon atoms; usually 2 to about 6 carbon atoms. The interpolymers are those in which two or more olefin monomers are interpolymerized according to well-known conventional procedures to form polyalkenes having units within their structure derived from each of said two or more olefin monomers. Thus, the polymers used include binary copolymers, terpolymers, tetrapolymers, and the like. The polyalkenes from which the substituent groups are derived are often referred to as polyolefin(s).

The olefin monomers from which the polyalkenes are derived are polymerizable olefin monomers characterized by the presence of one or more ethylenically unsaturated groups (i.e., >C=C<); that is, they are monoolefinic monomers such as ethylene, propylene, 1-butene, isobutene, and 1-octene or polyolefinic monomers (usually diolefinic monomers) such as 1,3-butadiene and isoprene.

These olefin monomers are usually polymerizable terminal olefins; that is, olefins characterized by the presence in their structure of the group >$C=CH_2$. However, polymerizable internal olefin monomers characterized by the presence within their structure of the group

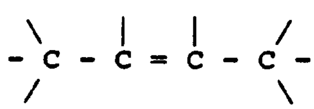

can also be used to form the polyalkenes. When internal olefin monomers are employed, they normally will be employed with terminal olefins to produce polyalkenes which are interpolymers. When a particular polymerizable olefin monomer can be classified as both a terminal olefin and an internal olefin, it is usually categorized as a terminal olefin. An example of such a monomer is 1,3-pentadiene (i.e., piperylene).

While the polyalkenes from which the substituent groups of the succinic acylating agents are derived generally are hydrocarbon polyalkenes, they can contain non-hydrocarbon groups such as lower alkoxy, lower alkyl

mercapto, hydroxy, mercapto, oxo, nitro, halo, cyano, carboalkoxy (i.e.,

$$-\overset{\overset{\textstyle O}{\|}}{C}-O-\text{alkyl}$$

where "alkyl" is usually lower alkyl, namely an alkyl group containing up to about 7 carbon atoms), alkanoyloxy (or carbalkoxy, i.e.,

$$\text{alkyl}-\overset{\overset{\textstyle O}{\|}}{C}-O-$$

where "alkyl" is usually lower alkyl), and the like, provided the non-hydrocarbon substituents do not substantially interfere with formation of the substituted succinic acid acylating agents. When present, such non-hydrocarbon groups normally will not contribute more than about 10% by weight of the total weight of the polyalkenes. Since the polyalkene can contain such non-hydrocarbon substituents, it is apparent that the olefin monomers from which the polyalkenes are made can also contain such substituents. Normally, however, as a matter of practicality and expense, the olefin monomers and the polyalkenes used are free from non-hydrocarbon groups, except chloro groups which usually facilitate the formation of the substituted succinic acylating agents.

Although the polyalkenes may include aromatic groups (especially phenyl groups and lower alkyl- and-/or lower alkoxy-substituted phenyl groups such as p-tert-butylphenyl and cycloaliphatic groups such as would be obtained from polymerizable cyclic olefins or cycloaliphatic substituted-polymerizable acyclic olefins, the polyalkenes usually will be free from such groups. Nevertheless, polyalkenes derived from interpolymers of both 1,3-dienes and styrenes such as 1,3-butadiene and styrene or 4-tert-butyl-styrene are exceptions to this generalization. Similarly, the olefin monomers from which the polyalkenes are prepared can contain both aromatic and cycloaliphatic groups.

Generally speaking aliphatic hydrocarbon polyalkenes free from aromatic and cycloaliphatic groups are preferred for use in preparing the substituted succinic acylating agents. Particularly preferred are polyalkenes which are derived from homopolymers and interpolymers of terminal hydrocarbon olefins of 2 to about 8 carbon atoms, most especially from 2 to 4 carbon atoms. While interpolymers of terminal olefins are usually preferred, interpolymers optionally containing up to about 40% of polymer units derived from internal olefins of up to about 8 carbon atoms are also preferred. The most preferred polyalkenes are polypropylenes and polyisobutenes.

Specific examples of terminal and internal olefin monomers which can be used to prepare the polyalkenes according to conventional, well-known polymerization techniques include ethylene; propylene; 1-butene; 2-butene; isobutene; 1-pentene; 1-hexene; 1-heptene, 2-butene; isobutene; 2-pentene, 1-hexene; 1-heptene; 1-octene; 1-nonene; 1-decene; 2-pentene; propylene-tetramer; diisobutylene; isobutylene trimer; 1,2-butadiene; 1,3-butadiene; 1,2-pentadiene; 1,3-pentadiene; 1,4-pentadiene; isoprene; 1,5-hexadiene; 2-chloro-1,3-butadiene; 2-methyl-1-heptene; 4-cyclohexyl-1-butene; 3-pentene; 4-octene; 3,3-di-methyl-1-pentene; styrene; 2,4-dichlorostyrene; divinylbenzene; vinyl acetate; allyl alcohol; 1-methyl-vinyl acetate; acrylonitrile; ethyl acrylate; methyl methacrylate; ethyl vinyl ether; and methyl vinyl ketone. Of these, the hydrocarbon polymerizable monomers are preferred and of these hydrocarbon monomers, the terminal olefin monomers are particularly preferred.

Specific examples of polyalkenes include polypropylenes, polybutenes, ethylene-propylene copolymers, styrene-isobutene copolymers, isobutene-1,3-butadiene copolymers, propene-isoprene copolymers, isobutene-chloroprene copolymers, isobutene-4-methyl-styrene copolymers, copolymers of 1-hexene with 1,3-hexadiene, copolymers of 1-octene with 1-hexene, copolymers of 1-heptene with 1-pentene, copolymers of 3-methyl-1-butene with 1-octene, copolymers of 3,3-dimethyl-1-pentene with 1-hexene, and terpolymers of isobutene, styrene and piperylene. More specific examples of such interpolymers include copolymer of 95% (by weight) of isobutene with 5% (by weight) of styrene; terpolymer of 98% of isobutene with 1% of piperylene and 1% of chloroprene; terpolymer of 95% of isobutene with 2% of 1-butene and 3% of 1-hexene; terpolymer of 60% of isobutene with 20% of 1-pentene and 20% of 1-octene; copolymer of 80% of 1-hexene and 20% of 1-heptene; terpolymer of 90% of isobutene with 2% of cyclohexene and 8% of propylene; and copolymer of 80% of ethylene and 20% of propylene. A preferred source of polyalkenes are the polyisobutenes obtained by polymerization of $C_4$ refinery stream having a butene content of 35 to 75 percent by weight and an isobutene

content of 30 to 60 percent by weight using a Lewis acid catalyst such as aluminum trichloride or boron trifluoride. These polybutenes contain predominantly (greater than about 80% of the total repeating units) of repeating units of the configuration

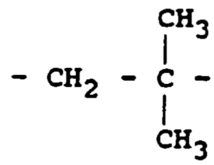

In preparing polyalkenes, conventional techniques known to those skilled in the art include suitably controlling polymerization temperatures, regulating the amount and type of polymerisation initiator and/or catalyst, employing chain terminating groups in the polymerization procedure, and the like. Other conventional techniques such as stripping (including vacuum stripping) a very light end and/or oxidatively or mechanically degrading high molecular weight polyalkene to produce lower molecular weight polyalkenes can also be used.

In preparing the substituted succinic acylating agents, one or more of the above-described polyalkenes is reacted with one or more maleic or fumaric acidic reactants of the general formula

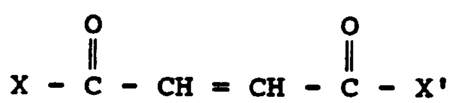

Formula IV

wherein X and X' are as defined hereinbefore. Preferably the maleic and fumaric reactants will be one or more compounds corresponding to the formula

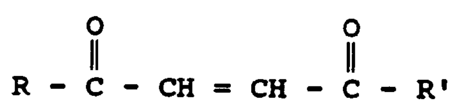

Formula V

wherein R and R' are as previously defined herein. Ordinarily the maleic or fumaric reactants will be maleic acid, fumaric acid, maleic anhydride, or a mixture of two or more of these. The maleic reactants are usually preferred over the fumaric reactants because the former are more readily available and are, in general, more readily reacted with the polyalkenes (or derivatives thereof) to prepare the substituted succinic acylating agents. The most preferred reactants are maleic acid, maleic anhydride, and mixtures of these.

Any of a variety of known procedures can be used to produce the substituted succinic acylating agents. For convenience and brevity, when the term "maleic reactant" is used hereafter, the term is generic to the reactants corresponding to Formulas IV and V above including mixtures of such reactants.

One procedure for preparing the substituted succinic acylating agents is illustrated, in part, by the two-step procedure described in U.S. Pat. No. 3,219,666. It involves first chlorinating the polyalkene until there is an average of at least about one chloro group for each molecular weight (i.e., each Mn) of polyalkene. Chlorination involves merely contacting the polyalkene with chlorine gas until the desired amount of chlorine is incorporated into the chlorinated polyalkene. Chlorination is generally carried out at a temperature of 75°C to 125°C. If desired, a diluent can be used in the chlorination procedure. Suitable diluents for this purpose include poly- and perchlorinated and/or fluorinated alkanes and benzenes.

The second step in the two-step chlorination procedure is to react the chlorinated polyalkene with the maleic reactant at a temperature usually within the range of 100°C to 200°C. The mole ratio of chlorinated polyalkene to maleic reactant is usually about 1:1. In this connection, a mole of chlorinated polyalkene may be regarded as the the weight of chlorinated polyalkene corresponding to the Mn value of the unchlorinated polyalkene. However, a stoichiometric excess of maleic reactant can be used, for example, a mole ratio of 1:2. If an average of more than about one chloro group per molecule of polyalkene is introduced during the chlorination step, then more than one mole of maleic reactant can react per molecule of chlorinated polyalkene. Accordingly, the ratio of chlorinated polyalkene to maleic reactant may be referred to in terms of equivalents, an equivalent weight of chlorinated polyalkene being the weight corresponding to the Mn value divided by the average number of chloro groups per molecule of chlorinated polyalkene. The equivalent weight of a maleic reactant is its molecular weight. Thus, the ratio of chlorinated polyalkene to maleic reactant will normally be such as to provided about

one equivalent of maleic reactant for each mole of chlorinated polyalkene up to about one equivalent of maleic reactant for each equivalent of chlorinated polyalkene with the understanding that it is normally desirable to provide an excess of maleic reactant; for example, an excess of 5% to 25% by weight. Unreacted excess maleic reactant may be stripped from the reaction product, usually under vacuum, or reacted during a further stage of the process as explained below.

The resulting polyalkenyl-substituted succinic acylating agent is, optionally, again chlorinated if the desired number of succinic groups are not present in the product. If there is present, at the time of this subsequent chlorination, any excess maleic reactant from the second step, the excess will react as additional chlorine is introduced during the subsequent chlorination. Otherwise, additional maleic reactant is introduced during and/or subsequent to the additional chlorination step. This technique can be repeated until the total number of succinic groups per equivalent weight of substituent groups reaches the desired level.

Another procedure for preparing substituted succinic acid acylating agents utilizes a process described in U.S. Pat. No. 3,912,764 and U.K. Pat. No. 1,440,219. According to that process, the polyalkene and the maleic reactant are first reacted by heating them together in a direct alkylation procedure. When the direct alkylation step is completed, chlorine is introduced into the reaction mixture to promote reaction of the remaining unreacted maleic reactants. According to the patents, 0.3 to 2 or more moles of maleic anhydride are used in the reaction for each mole of olefin polymer; i.e., polyalkene. The direct alkylation step is conducted at temperatures of 180°C to 250°C. During the chlorine-ntroducing stage, a temperature of 160°C to 225°C is employed.

Other known processes for preparing the substituted succinic acylating agents include the one-step process described in U.S. Pat. Nos. 3,215,707 and 3,231,587. Basically, this process involves preparing a mixture of the polyalkene and the maleic reactant in suitable proportions and introducing chlorine into the mixture, usually by passing chlorine gas through the mixture with agitation, while maintaining a temperature of at least about 140°C.

Usually, where the polyalkene is sufficiently fluid at 140°C and above, there is no need to utilize an additional substantially inert, normally liquid solvent/iluent in the one-step process. However, if a solvent/iluent is employed, it is preferably one that resists chlorination such as the poly- and per-chlorinated and/or -fluorinated alkanes, cycloalkanes, and benzenes.

Chlorine may be introduced continuously or intermittently during the one-step process. The rate of introduction of the chlorine is not critical although, for maximum utilization of the chlorine, the rate should be about the same as the rate of consumption of chlorine in the course of the reaction. When the introduction rate of chlorine exceeds the rate of consumption, chlorine is evolved from the reaction mixture. It is often advantageous to use a closed system, including superatmospheric pressure, in order to prevent loss of chlorine so as to maximize chlorine utilization.

The minimum temperature at which the reaction in the one-step process takes place at a reasonable rate is about 140°C. Thus, the minimum temperature at which the process is normally carried out is in the neighborhood of 140°C. The preferred temperature range is usually between 160°C and 220°C. Higher temperatures such as 250°C or even higher may be used but usually with little advantage. In fact, excessively high temperatures may be disadvantageous because of the possibility that thermal degradation of either or both of the reactants may occur at excessively high temperatures.

In the one-step process, the molar ratio of maleic reactant to chlorine is such that there is at least about one mole of chlorine for each mole of maleic reactant to be incorporated into the product. Moreover, for practical reasons, a slight excess, usually in the neighborhood of 5% to 30% by weight of chlorine, is utilized in order to offset any loss of chlorine from the reaction mixture. Larger amounts of excess chlorine may be used.

Further details concerning procedures for producing the substituted acylating agents have been extensively described in the patent literature, such as for example in U.S. Pat. No. 4,234,435, and thus further amplification of such procedures herein is deemed unnecessary.

As noted above, the substituted acylating agents are reacted with (a) amine having at least one primary or secondary amino group in the molecule, or (b) alcohol, or (c) reactive metal or reactive metal compound, or (d) a combination of two or more of (a) through (c), the components of (d) being reacted with the acylating reagents simultaneously or sequentially in any order and/or subcombination.

The amine, reactant (a) above, can be a monoamine or polyamine, including hydrazine and substituted hydrazines. Such reactants can be used either singly or in various mixtures. Use of polyamines having at least two primary amino groups in the molecule are generally preferred. Alkylene polyamines having both primary and secondary amino groups in the molecule are particularly preferred, especially where the alkylene polyamines contain at least two primary amino groups and one or more secondary amino groups.

Alcohols, reactant (b) above, which can be used include the monohydric and polyhydric alcohols. The polyhydric alcohols are preferred.

Reactive metals and reactive metal compounds, reactant (c) above, are those which are known to form

salts and complexes when reacted with carboxylic acids and carboxylic acid acylating agents.

Numerous examples of reactants (a), (b), and (c) are set forth in U.S. Pat No. 4,234,435 to which reference may be had for this purpose.

Of the various succinic derivatives which may be used in the practice of this invention, those formed by reaction between an alkenyl succinic acid or alkenyl succinic anhydride and an alkylene polyamine or mixture of alkylene polyamines are preferred. Such polyamines may be represented by the formula

$$H_2N(CH_2)_n(NH(CH_2)n)_mNH_2$$

wherein n is in the range of 2 to 10 (preferably 2 to 3, and most preferably 2) and m is in the range of 0 to 10, (preferably 0 to 6). Illustrative are ethylene diamine, diethylene triamine, triethylene tetraamine, tetraethylene pentamine, pentaethylene hexamine, propylene diamine (1,3-propanediamine), butylene diamine (1,4-butanediamine), hexamethylene diamine (1,6-hexanediamine), decamethylene diamine (1,10-decanediamine), and the like. Particularly preferred for use is tetraethylene pentamine or a mixture of ethylene polyamines which approximates tetraethylene pentamine such as "DOW E-100" (a commercial mixture available from Dow Chemical Company, Midland, Michigan).

When preparing the boronated succinimides and boronated succinic esters, a succinimide or succinic ester (or mixture thereof) is reacted with one or more boron-ontaining reactants such as boron halides, boron acids, and esters of boron acids. Boric acid is commonly used for this purpose. The procedures employed in producing boronated succinimides and boronated succinic esters are well documented in the patent literature.

As those skilled in the art can appreciate, various succinimides, succinic esters, boronated succinimides, and boronated succinic esters are available as articles of commerce.

Component (ii)

The other component required in the gear oil compositions of this invention is one or more amine salts of (e) one or more long chain monocarboxylic acids, or of (f) one or more long chain polycarboxylic acids, or of (g) a combination of at least one acid of (e) and at least one acid of (f). Generally speaking, these acids contain from 8 to 50 carbon atoms in the molecule and thus the salts are oil-soluble. A variety of amines can be used in forming such salts, including primary, secondary and tertiary amines, and the amines can be monoamines, or polyamines. Further, the amines may be cyclic or acyclic aliphatic amines, aromatic amines, heterocyclic amines, or amines containing various mixtures of acyclic and cyclic groups.

Preferred amine salts include the alkyl amine salts of alkanoic acid and the alkyl amines salts of alkanedioic acids.

The amine salts are formed by classical chemical reactions, namely, the reaction of an amine or mixture of amines, with the appropriate acid or mixture of acids. Accordingly, further discussion concerning methods for the preparation of such materials would be redundant.

Among the amine salts of long-chain acids that may be used are the following: lauryl ammonium laurate (i.e. the lauryl amine salt of lauric acid), stearyl ammonium laurate, cyclohexyl ammonium laurate, octyl ammonium laurate, pyridine laurate, aniline laurate, lauryl ammonium stearate, stearyl ammonium stearate, cyclohexyl ammonium stearate, octylammonium stearate, pyridine stearate, aniline stearate, lauryl ammonium octanoate, stearyl ammonium octanoate, cyclohexyl ammonium octanoate, octyl ammonium octanoate, pyridine octanoate, aniline octanoate, nonyl ammonium laurate, nonyl ammonium stearate, nonyl ammonium octanoate, lauryl ammonium nonanoate, stearyl ammonium nonanoate, cyclohexyl ammonium nonanoate, octyl ammonium nonanoate, pyridine nonanoate, aniline nonanoate, nonyl ammonium nonanoate, lauryl ammonium decanoate, stearyl ammonium decanoate, cyclohexyl ammonium decanoate, octyl ammonium deconoate, pyridine decanoate, aniline decanoate, decyl ammonium laurate, decyl ammonium stearate, decyl ammonium octanoate, decyl ammonium nonanoate, decyl ammonium decanoate, bis octyl amine salt of suberic acid, bis cyclohexyl amine salt of suberic acid, bis lauryl amine salt of suberic acid, bis stearyl amine salt of suberic acid, bis octyl amine salt of sebacic acid, bis cyclohexyl amine salt of sebacic acid, bis lauryl amine salt of sebacic acid, bis stearyl amine salt of sebacic acid, the tert-dodecyl and tert-tetradecyl primary amine salts of octanoic acid, the tert-decyl and tert-dodecyl primary amine salts of octanoic acid, the tert-dodecyl and tert-tetradecyl primary amine salts of lauric acid, the tert-decyl and tert-dodecyl primary amine salts of lauric acid, the tert-dodecyl and tert-tetradecyl primary amine salts of stearic acid, the tert-decyl and tert-dodecyl primary amine salts of stearic acid, the hexyl amine salt of $C_{24}$-dicarboxylic acid, the octyl amine salt of $C_{28}$-dicarboxylic acid, the octyl amine salt of $C_{30}$-dicarboxylic acid, the decyl amine salt of $C_{30}$-dicarboxylic acid, the octyl amine salt of $C_{32}$-dicarboxylic acid, the bis lauryldimethyl amine salt of traumatic acid, diethyl ammonium laurate, dioctyl ammonium laurate, dicyclohexyl ammonium laurate, diethyl ammonium octanoate, dioctyl ammonium octanoate, dicyclohexyl ammonium octanoate, diethyl ammonium stearate, dioctyl ammonium stearate, diethyl a mmonium stearate, dibutyl ammonium stearate, dicyclopentyl ammonium stearate, dipropyl ammonium benzoate, didecyl ammonium benzoate, dimethylcyclohexyl ammonium benzoate, triethyl ammonium laurate, triethyl ammonium octanoate, triethyl ammonium stearate, triethyl ammonium benzoate, trioctyl ammonium laurate, trioctyl ammonium octanoate, trioctyl ammonium stearate, trioctyl ammonium benzoate, and the like. It will be understood of course that the amine salt of the monocarboxylic and/or polycarboxylic acid used should be sufficiently soluble in the base oil used as to provide homogeneous solution at the concentration employed.

Among the preferred amine salts for use in practice of this invention are the primary amine salts of long chain monocarboxylic acids in which the amine thereof is a monoalkyl monoamine, $RNH_2$; the secondary amine salts of long chain monocarboxylic acids in which the amine thereof is a dialkyl monoamine, $R_2NH$; the tertiary amine salts of long chain monocarboxylic acids in which the amine thereof is a trialkyl monoamine, $R_3N$; the bis primary amine salts of long chain dicarboxylic acids in which the amine thereof is a monoalkyl monoamine, $RNH_2$; the bis secondary amine salts of long chain dicarboxylic acids in which the amine thereof is a dialkyl monoamine, $R_2NH$; the bis tertiary amine salts of long chain dicarboxylic acids in which the amine thereof is a trialkyl monoamine, $R_3N$; and mixtures thereof. In the foregoing formulae, R is an alkyl group which contains up to about 30 or more carbon atoms, and preferably from 6 to 24 carbon atoms.

As pointed out above, the other components which may be used in the gear oil formulations of this invention are well known to those skilled in the art, and form no part of this invention. Nevertheless, brief discussions concerning a few such components are set forth below.

Extreme pressure and antiwear agents - The most common chemical elements found in extreme pressure and antiwear gear oil additives are sulfur, chlorine, phosphorus, lead, zinc, or boron. A number of sulfur-containing additives, phosphorus-containing additives, and sulfur- and phosphorus-containing additives, have been identified at the outset hereinabove. Preferred additives of this type include mixtures of alkyl phosphites and phosphates, sulfurized olefins, sulfurized esters, dihydrocarbyl polysulfides, and like materials. Typical chlorine-containing additives include chlorinated paraffin wax, trichlorothioacetals, tris(trichloroethyl)phosphate, metal chlorides, reaction products between chlorine or chloride anion with compounds containing suitable functionality (such as olefins, carboxylic acids, or alcohols), and like materials. Additives based on lead are normally lead soaps such as lead naphthenate or lead oleate, or lead salts such as lead carbamate. Typical zinc additives include zinc dithiophosphates, zinc dithiocarbamates, zinc salts of organic acids, such as zinc acetate, zinc naphthenate, zinc salts of ethylene diamine tetraacetic acid, zinc chelates such as zinc octyl acetoacetate, and the like. Among the boron additives which may used are boronated amines, metal borate salts, boronated phosphenes, boronated phosphites, and the like.

Defoamers - Illustrative materials of this type include silicone oils of suitable viscosity, sodium and potassium salts of oil soluble acids such as potassium oleate, sodium alkylbenzene sulfonates, glycerol monostearate, polyglycol palmitate, trialkyl monothiophosphates, esters of sulfonated ricin-oleic acid, benzoyl-acetone, methyl salicylate, glycerol monooleate, glycerol dioleate, and the like. Defoamers are generally employed at concentrations of up to about 1% in the additive concentrate.

Demulsifiers - Typical additives which may be employed as demulsifiers in gear oils include alkyl benzene sulfonates, polyethylene oxides, polypropylene oxides, salts and esters of oil soluble acids, and the like. Such additives are generally employed at concentration of up to about 3% in the additive concentrate.

Sulfur scavengers - This class of additives includes such materials as thiadiazoles, triazoles, and in general, compounds containing moieties reactive to free sulfur under elevated temperature conditions. See for example U.S. Pat. Nos. 3,663,561 and 4,097,387. Concentrations of up to about 3% in the concentrate are typical.

Antioxidants - Ordinarily, antioxidants that may be employed in gear oil formulations include phenolic compounds, amines, phosphites, and the like. Amounts of up to about 5% in the concentrate are generally sufficient.

Other commonly used additives or components include anti-rust agents or rust inhibitors, corrosion inhibitors, detergents, dyes, metal deactivators, pour point depressants, and diluents.

## Claims

1. An additive concentrate for a gear oil which concentrate comprises at least one phosphorus-containing component, at least one sulfur-containing component and at least one nitrogen-containing component in amounts such that the weight ratio of sulfur to phosphorus is 5:1 to 40:1 and the weight ratio of nitrogen to phosphorus is 0.05:1 to 2:1 and also
(i) at least one carboxylic derivative composition produced by reacting at least one substituted succinic acylating agent having a substituent group derived from polyalkene having an Mn value of 500 to 10,000 with at least one reactant selected from (a) an amine having at least one primary or secondary amino group in the molecule so that formation of imide linkage occurs, (b) an alcohol and (c) a reactive metal

or reactive metal compound, the reaction of two or more of any of (a) to (c) with said substituted succinic acylating agent(s) being effected simultaneously or sequentially in any order, and
(ii) at least one amine salt of at least one long chain ($C_8$ to $C_{50}$) monocarboxylic or polycarboxylic acid.

2. A concentrate according to claim 1 wherein said carboxylic derivative composition (i) is composed predominantly or entirely of at least one succinimide formed by reacting at least one alkenyl succinic acid or anhydride wherein the alkenyl group is derived from polyalkene having an Mn value of from 750 to 5,000 with at least one alkylene polyamine of the formula
$$H_2N(CH_2)_n(NH(CH_2)_n)_mNH_2$$
wherein n is 2 to 3 and m is O to 10.

3. A concentrate according to claim 1 or 2 wherein said at least one amine salt (ii) includes an alkyl amine salt of a long chain monocarboxylic acid and/or an alkyl amine salt of a long chain dicarboxylic acid.

4. A concentrate according to claim 2 or 3 wherein said at least one succinimide is a boronated succinimide or a mixture of boronated succinimides.

5. A concentrate according to any one of claims 1 to 4 which also comprises a trihydrocarbyl dithiophosphate.

6. A gear oil comprising a gear oil base stock and an additive concentrate as claimed in any one of the preceding claims.

7. A gear oil according to claim 5 wherein the additive concentrate is incorporated into the gear oil base stock at a concentration of 1 to 15 weight percent.

8. A gear oil which contains an additive complement including at least one phosphorus-containing component, at least one sulfur-containing component and at least one nitrogen-containing component in amounts such that the weight ratio of sulfur to phosphorus is 5:1 to 40:1 and the weight ratio of nitrogen to phosphorus is 0.05:1 to 2:1, and also at least one carboxylic derivative composition (i) and at least one amine salt (ii), both (i) and (ii) being as defined in any one of claims 1 to 4.

**Patentansprüche**

1. Additiv-Konzentrat für Getriebeöl enthaltend mindestens eine phosphorhaltige Komponente, mindestens eine schwefelhaltige Komponente und mindestens eine stickstoffhaltige Komponente in solchen Mengen, daß das Gewichtsverhältnis von Schwefel zu Phosphor 5 : 1 bis 40 : 1 und das Gewichtsverhältnis von Stickstoff zu Phosphor 0,05 : 1 bis 2 : 1 beträgt, sowie
( i) mindestens eine Carboxylderivatzusammensetzung, die durch Umsetzung von mindestens einem substitierten Bernsteinsäureacylierungsmittel mit einer aus Polyalken mit einem Mn-Wert von 500 bis 10.000 abgeleiteten Substituentengruppe mit mindestens einem aus (a) einem Amin mit mindestens einer primären oder sekundären Aminogruppe im Molekül, so daß es zur Bildung von Imidverknüpfungen kommt, (b) einem Alkohol und (c) einem reaktiven Metall oder einer reaktiven Metallverbindung ausgewählten Reaktanten hergestellt wird, wobei die Reaktion von zwei oder mehr beliebigen Substanzen von (a) bis (c) mit dem/den substituierten Bernsteinacylierungsmittel(n) gleichzeitig oder nacheinander in beliebiger Reihenfolge erfolgt und
(ii) mindestens ein Aminsalz mindestens einer langkettigen ($C_8$ bis $C_{50}$) Mono- oder Polycarbonsäure.

2. Konzentrat nach Anspruch 1, bei dem die Carboxylderivatzusammensetzung (i) hauptsächlich oder ganz aus mindestens einem Succinimid besteht, das durch die Umsetzung von mindestens einer Alkenylbernsteinsäure oder einem -anhydrid gebildet wird, in dem die Alkenylgruppe aus Polyalken mit einem Mn-Wert von 750 bis 5.000 abgeleitet ist, mit mindestens einem Alkylenpolyamin der Formel
$$H_2N(CH_2)_n(NH(CH_2)_n)_mNH_2,$$
in der n 2 bis 3 und m 0 bis 10 ist.

3. Konzentrat nach Anspruch 1 oder 2, in dem mindestens ein Aminsalz (ii) ein Alkylaminsalz einer langkettigen Monocarbonsäure und/oder ein Alkylaminsalz einer langkettigen Dicarbonsäure enthält.

4. Konzentrat nach Anspruch 2 oder 3, in dem mindestens ein Succinimid ein boriertes Succinimid oder eine

Mischung aus borierten Succinimiden ist.

5. Konzentrat nach einem der Ansprüche 1 bis 4, das auch ein Trihydrocarbyldithiophosphat umfaßt.

6. Getriebeöl, das eine Getriebeölgrundmischung und ein Additiv-Konzentrat nach einem der vorstehenden Ansprüche umfaßt.

7. Getriebeöl nach Anspruch 5, in dem das Additiv-Konzentrat in einer Konzentration von 1 bis 15 Gewichtsprozent in die Getriebeölgrundmischung eingearbeitet ist.

8. Getriebeöl, das ein Additiv-Ergänzungsmittel enthält, das mindestens eine phosphorhaltige Komponente, mindestens eine schwefelhaltige Komponente und mindestens eine stickstoffhaltige Komponente in solchen Mengen, daß das Gewichtsverhältnis von Schwefel zu Phosphor 5 : 1 bis 40 : 1 und das Gewichtsverhältnis von Stickstoff zu Phosphor 0,05 : 1 bis 2 : 1 beträgt, sowie mindestens eine Carboxylderivatzusammensetzung (i) und mindestens ein Aminsalz (ii) enthält, wobei sowohl (i) als auch (ii) die in einem der Ansprüche 1 bis 4 angegebene Definition haben.

## Revendications

1. Concentré d'additifs destiné à une huile pour engrenages, concentré qui comprend au moins un composant renfermant du phosphore, au moins un composant contenant du soufre et au moins un composant contenant de l'azote en quantités telles que le rapport en poids du soufre au phosphore ait une valeur de 5:1 à 40:1 et que le rapport en poids de l'azote au phosphore ait une valeur de 0,05:1 à 2:1 et aussi
(i) au moins une composition à base d'un dérivé carboxylique produite par réaction d'au moins un agent acylant succinique substitué portant un groupe substituant dérivé de polyalcène ayant une valeur $M_n$ de 500 à 10 000 avec au moins un corps réactionnel choisi entre (a) une amine portant au moins un groupe amino primaire ou secondaire dans sa molécule, de manière à former une liaison imide, (b) un alcool et (c) un métal réactif ou un composé de métal réactif, la réaction de deux ou plus de deux quelconques de (a) à (c) avec l'agent ou les agents acylants succiniques substitués étant conduite simultanément ou successivement dans un ordre quelconque et,
(ii) au moins un sel d'amine d'au moins un acide monocarboxylique ou polycarboxylique à longue chaîne (en $C_8$ à $C_{50}$).

2. Concentré suivant la revendication 1, dans lequel la composition (i) à base d'un dérivé carboxylique est principalement ou entièrement constituée d'au moins un succinimide formé par réaction d'au moins un acide ou anhydride d'acide alcénylsuccinique dont le groupe alcényle est dérivé d'un polyalcène ayant une valeur $M_n$ de 750 à 5000 avec au moins une alkylène-polyamine de formule

$$H_2N(CH_2)_n(NH(CH_2)_n)_mNH_2$$

dans laquelle $\underline{n}$ a une valeur de 2 à 3 et $\underline{m}$ a une valeur de 0 à 10.

3. Concentré suivant la revendication 1 ou 2, dans lequel le sel d'amine (ii) ayant au moins un représentant comprend un sel d'alkylamine d'un acide monocarboxylique à longue chaîne et/ou un sel d'alkylamine d'un acide dicarboxylique à longue chaîne.

4. Concentré suivant la revendication 2 ou 3, dans lequel le succinimide ayant au moins un représentant est un succinimide combiné au bore ou un mélange de succinimides combinés au bore.

5. Concentré suivant l'une quelconque des revendications 1 à 4, qui comprend aussi un dithiophosphate de trihydrocarbyle.

6. Huile pour engrenages, comprenant une huile de base appropriée et un concentré d'additifs suivant l'une quelconque des revendications précédentes.

7. Huile pour engrenages suivant la revendication 5, dans l'huile de base de laquelle le concentré d'additifs est incorporé à une concentration de 1 à 15 % en poids.

8. Huile pour engrenages, qui contient un complément d'additifs renfermant au moins un composant contenant du phosphore, au moins un composant contenant du soufre et au moins un composant contenant

de l'azote en quantités telles que le rapport en poids du soufre au phosphore ait une valeur de 5:1 à 40:1 et que le rapport en poids de l'azote au phosphore ait une valeur de 0,05:1 à 2:1, ainsi qu'au moins une composition (i) à base d'un dérivé carboxylique et au moins un sel d'amine (ii), les deux composants (i) et (ii) étant tels que définis dans l'une quelconque des revendications 1 à 4.